# EUROPEAN PATENT SPECIFICATION

(11) **EP 1 592 219 B1**
(45) Date of publication and mention of the grant of the patent: **13.07.2011**
(21) Application number: 05008094.4
(22) Date of filing: 13.04.2005
(51) Int. Cl.: H04M 7/00

(54) **IP telephone system, IP telephone apparatus and calling method**
IP Kommunikationssytem, IP Telefongerät und Anrufverfahren
Système de téléphone IP, appareil de téléphone IP et procédé d'appel

(30) Priority: 30.04.2004 JP 2004135954
(43) Date of publication of application: 02.11.2005
(73) Proprietor: Panasonic Corporation, Kadoma-shi Osaka 571-8501 (JP)
(72) Inventor: Kaizawa, Yasuhito, Chigasaki-shi Kanagawa-ken 253-0056 (JP); Kobayashi, Kazuto, Kawasaki-shi Kanagawa-ken 213-0011 (JP); Miyajima, Akira, Yokohama-shi Kanagawa-ken 222-0023 (JP)
(74) Representative: Grünecker, Kinkeldey, Stockmair & Schwanhäusser Anwaltssozietät

(56) References cited:
- FR-A- 2 841 072

## Description

### Background of the invention

### Field of the Invention

The present invention relates to an IP telephone system, an IP telephone apparatus and a calling method that perform communication via an IP network.

### Description of Related Art

As the Internet has rapidly grown, Internet telephone systems (IP telephone systems) that enable communication with remote places at low costs have become the focus of users' attention.

Conventionally, it has been proposed to provide an Internet telephone system that sets, on the Internet, a server that is able to store an IP address corresponding to a telephone number of a called telephone apparatus. When the telephone number of the opposite party is input, an IP address corresponding to the telephone number of the opposite party is received from the server, and a connection operation is executed to the opposite party based on the received IP address. When a corresponding IP address cannot be obtained, the system chooses either an Internet telephone gateway or a PSTN (Public Switched Telephone Network) (hereafter referred to as PSTN) as a communication path, whichever results in a lower telephone charge (see Japanese Patent Laid Open Publication 2002 - 176453).

However, such a conventional Internet telephone system requires a unified protocol to be used between a calling terminal and a called terminal when the calling terminal places a call to an opposite party with an obtained IP address corresponding to the telephone number of the opposite party. Thus, a conventional Internet system is problematic in that a unified protocol has to be prepared in advance and no communication can be established with a telephone apparatus that corresponds to protocols other than such a unified protocol.

On the other hand, the rapid growth of Internet telephones has been increasing the workload for CA (Call Agent) that manages voice communication via an IP network. The voice communication is performed by an IP telephone apparatus (hereafter referred to as IP telephone) that is set on the IP network. Therefore, it is currently requested to reduce the workload for CAs on the IP network. The following describes the current workload which CAs bear.

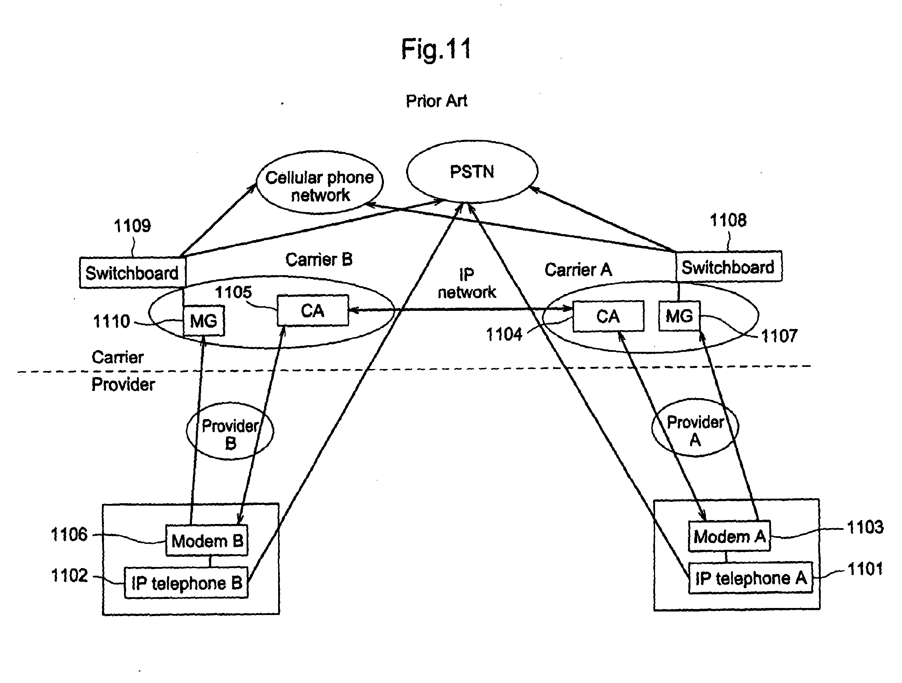

Fig. 11 shows a communication path used for a conventional IP telephone system. The following describes the communication path between IP telephone A1101 and IP telephone B1102 shown in Fig. 11.

In Fig. 11, IP telephone A1101 and IP telephone B1102 are owned by different providers and managed by CAs which are owned by different carriers. IP telephone A1101 and IP telephone B1102 have functions to enable the voice communication via the IP network or the PSTN. Also, CAs have functions as a SIP (Session Initiation Protocol) server.

When IP telephone A1101 communicates with IP telephone B1102, the communication is performed via the IP network or the PSTN. The following describes the communication performed, via the IP network, between IP telephone A1101 and IP telephone B1102 according to a SIP protocol.

When the communication is attempted via the IP network, IP telephone A1101 transmits, to CA 1104 owned by carrier A, the message "INVITE" via modem A1103. The message "INVITE" includes information regarding the destination terminal (IP telephone B1102). CA 1104 searches for another CA that manages the destination terminal, since CA 1104 does not manage the destination terminal. As a result of the search, CA 1105 that is owned by carrier B is found, and the aforesaid message "INVITE" is transmitted from CA 1104 to CA 1105. CA 1105 transmits the message "INVITE" to IP telephone B1102. IP telephone B1102 receives the message "INVITE" via modem B1106. Then, messages specified by SIP are exchanged between IP telephone A1101 and IP telephone B1102, and the two telephones are ready to communicate.

On the other hand, when the communication is attempted via the PSTN, IP telephone A1101 inputs the telephone number of IP telephone B1102 and places a call to IP telephone B1102. IP telephone B1102 receives a call from IP telephone A1101 via the PSTN. When the receiver of IP telephone B1102 is picked up, connection is established between IP telephone A1101 and IP telephone B1102, and the two telephones are ready to communicate.

Fig. 11 also shows the communication path between IP telephone A1101 and a terminal on the PSTN or a cellular phone network. In this example, voice date received from IP telephone A1101 is converted, at MG (Media Gateway) 1107, into a data format necessary for the communication via the PSTN or the cellular phone network. Then, the converted data is transmitted to the PSTN or the cellular phone network via switchboard 1108.

When the communication is attempted via the IP network and when there are some problems occurred within the IP network, CA 1104 establishes communication via networks other than the IP network. For example, when the communication is performed via the PSTN, the voice data received from IP telephone A1101 is transmitted to the PSTN via MG 1107 and switchboard 1108 as described above. Then, the voice data is transmitted to IP telephone B1102 via switchboard 1109 and MG 1110 of carrier B.

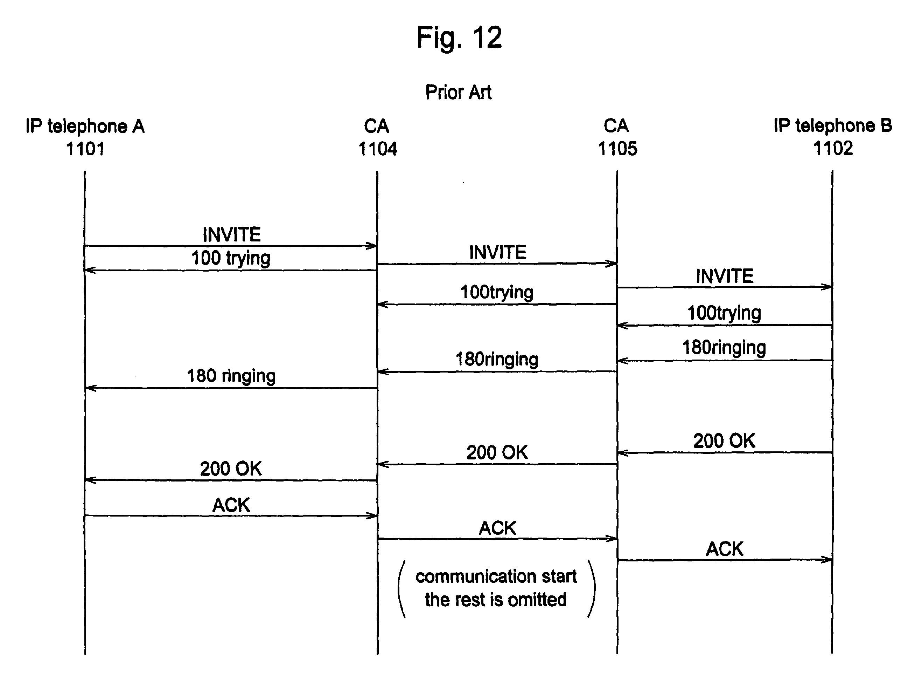

Fig. 12 is a sequence diagram illustrating the communication performed via the IP network.

When IP telephone A1101 places a call, the message "INVITE" is transmitted to CA 1104. CA 1104 transmits the message "INVITE" to CA 1105. At the same time, CA 1104 transmits the message "100 trying" to IP telephone A1101. Similarly, CA 1105 transmits the message "INVITE" to IP telephone B1102. At the same time, CA 1105 transmits the message "100 trying" to CA 1104.

Upon receiving the message "INVITE", IP telephone B1102 transmits, to CA 1105, the message "100 trying" and then the message "180 Ringing". At the same time as transmitting the message "180 Ringing", IP telephone B1102 sounds a receiving tone. CA 1105 transmits the message "180 Ringing" to CA 1104. CA 1104 transmits the message "180 Ringing" to IP telephone A1101. IP telephone A1101 then sounds a ringing tone in response to the message "180 Ringing".

When, through the receiving tone, a hook-off condition is detected at the receiver of IP telephone B1102, IP telephone 81102 transmits, to CA 1105, the message "200 OK" which indicates a connection approval. CA 1105 transmits the message "200 OK" to CA 1104. CA 1104 transmits the message "200 OK" to IP telephone A1101.

Upon receiving the message "200 OK", IP telephone A1101 transmits, to CA 1104, the message "Acknowledge (hereafter referred to as ACK) ". CA 1104 transmits the message "ACK" to CA 1105. CA 1105 transmits the message "ACK" to IP telephone 81102. When IP telephone B1102 receives the message "ACK", IP telephone A1101 and IP telephone B1102 are ready to communicate via the IP network.

However, when the communication is performed via the IP network as described above, CA needs to relay all the messages, such as "INVITE" or "200 OK", to destination terminals or other CAs. This puts an excessive workload on CA and will thus become a more serious problem in the future with the growth of IP telephones.

Also, when the communication is performed via the PSTN and when a calling IP telephone does not store information regarding whether the communication can be established with the destination terminal via the PSTN, predetermined signals (e.g., SIP "INVITE" message) are transmitted to CA when calls are placed. Thus, CA handles all the signals transmitted via the PSTN as well as the IP network, which puts an excessive workload on CA.

FR-A-2 841 072 discloses a system for accessing and/or updating a DNS server and/or LDAP directories. The system is adapted to access and/or update a record entry stored in a first data base wherein the first database is hosted by a domain name server or a LDAP server and said system comprises communication means for receiving an access and/or update request of the plurality of resource records.

### Summary of the Invention

The present invention is provided to address the above-described problems. The objectives of the present invention is to provide an IP telephone system, an IP telephone apparatus and a calling method that are able to handle multiple protocols needed to perform the communication via the IP network and to reduce the workload for CAs on the IP network.

This object is solved by the subject matters of the independent claims. Preferred embodiments are subject matter of the dependent claims.

### Brief Description of the Drawings

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 illustrates a network configuration to which the IP telephone system according to an embodiment of the present invention applies;
Fig. 2 is a block diagram illustrating a configuration of the IP telephone that structures the IP telephone system according to the embodiment of the present invention;
Fig. 3 is a block diagram illustrating a configuration of an ENUM server that structures the IP telephone system according to the embodiment of the present invention;
Fig. 4 shows an example of NAPTR resource records stored in DB of the ENUM server according to the embodiment of the present invention;
Fig. 5 is a flow chart illustrating an operation where IP telephone A places a call to IP telephone B in the IP telephone system according to the embodiment of the present invention;
Fig. 6 is a flow chart illustrating the IP telephone connection start process in the IP telephone system according to the embodiment of the present invention;
Fig. 7 is a flow chart illustrating the H.323 connection start process in the IP telephone system according to the embodiment of the present invention;
Fig. 8 is a sequence diagram illustrating the communication performed according to a SIP protocol in the IP system according to the embodiment of the present invention;
Fig. 9 is a sequence diagram illustrating the communication via the PSTN in the IP telephone system according to the embodiment of the present invention;
Fig. 10 is a sequence diagram illustrating the communication according to the H.323 protocol in the IP telephone system according to the embodiment of the present invention;
Fig. 11 illustrates a communication path used for a conventional IP telephone system; and
Fig. 12 is a sequence diagram illustrating communication via a conventional IP network.

### Detailed Description of Preferred Embodiments

The embodiments of the present invention are explained in the following, in reference to the above-described drawings.

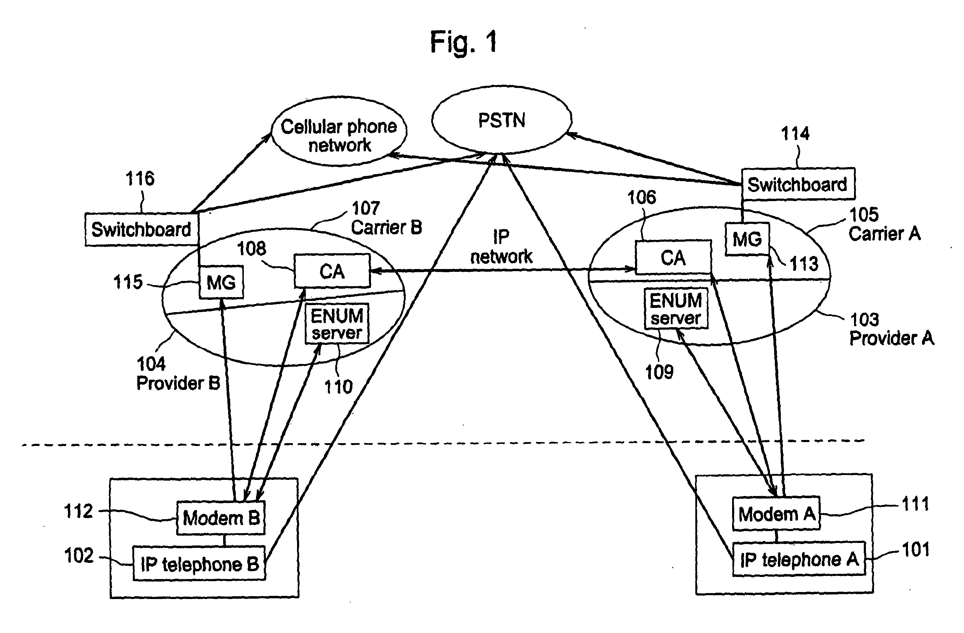

Fig. 1 is a diagram illustrating a network configuration to which the IP telephone system according to the embodiment of the present invention applies.

Fig. 1 shows a network configuration necessary to establish the communication between IP telephone A101 and IP telephone B102 that use different providers. IP telephone A101 uses provider A103; IP telephone B102 uses provider B104. IP telephones A101 and B102 have functions which enable the voice communication via the IP network and the PSTN.

Also, IP telephone A101 and IP telephone B102 are managed by CAs. CAs are configured with IP telephone management servers and are owned by different carriers. IP telephone A101 is managed by CA 106, which is owned by carrier A105; IP telephone B102 is managed by CA 108, which is owned by carrier B107. CA 106 and CA 108 manage the voice communication performed between IP telephone A101 and IP telephone B102 via the IP network. Also, CA 106 and CA 108 have SIP (Session Initiation Protocol) server functions. Provider A103 uses CA 106 which is operated by carrier A105; provider B104 uses CA 108 which is operated by carrier B107.

Provider A103 includes a terminal apparatus that functions as ENUM (E. 164 telephone Number Mapping) server 109. For example, ENUM server 109 can be configured as a personal computer (hereafter referred to as PC) equipped with a software which can manage a database. Provider B104, as well as provider A103, is configured with ENUM server 110. ENUM servers 109 and 110 have functions as a DNS (Domain Name System) server. DNS servers can be configured separately from ENUM servers 109 and 110 without providing ENUM servers with DNS server functions. Also, ENUM servers 109 and 110 can be owned by carriers A105 and B107 instead of being owned by providers A103 and B104.

In the IP telephone system according to the present embodiment, the communication is performed between IP telephone A101 and IP telephone B102 via the IP network or the PSTN as described in Fig. 1. When the communication is performed via the IP network, signals or data are transmitted from IP telephone A101 to CA 106, ENUM server 109, or the like via modem A111. Modem A111 is configured with DSL modem or the like. Similarly, signals or data are transmitted from IP telephone B102 via modem B112. Modem B112 is configured with DSL modem or the like.

When the communication is performed via the IP network, signals or data are exchanged between IP telephone A101 and CA 106 according to the SIP protocol or the H.323 protocol. When the communication is performed according to the SIP protocol, signals or data are directly exchanged between IP telephone A101 and CA 106. On the other hand, when the communication is performed according to the H.323 protocol, signals or data are exchanged via a gatekeeper (not shown in the figure). The gatekeeper configures the IP telephone management server. In both cases, when a signal indicating a connection approval is received from IP telephone B102, which is the destination terminal, the communication becomes possible. Also, signals or data are transmitted according to the SIP protocol and the H.323 protocol are later described.

On the other hand, when the communication is performed via the PSTN, IP telephone A101 inputs the telephone number of IP telephone B102 and places a call to IP telephone B102. Then, IP telephone B102 receives a call from IP telephone A101 via the PSTN. When the receiver of IP telephone B102 is picked up, connection is established between IP telephone A101 and IP telephone B102. Then, the two telephones are ready to communicate.

When the communication is performed via the PSTN, IP telephone A101, which is the calling terminal, needs to be set not to transmit a request to ENUM server 109. When such a setup is not provided, IP telephone A101 transmits, to ENUM server 109, a request for a NAPTR resource record. This process is later described.

In the IP telephone system according to the present embodiment, when the communication is performed via the IP network and the PSTN, IP telephone A101 first transmits, to ENUM server 109, a request for a NAPTR resource record. Then, a communication path is chosen according to the received NAPTR resource record, and the communication is performed with IP telephone B102, which is the destination terminal.

Fig. 1 also illustrates the communication path between IP telephone A101 (IP telephone B102) and a terminal on the cellular phone network or the PSTN. In this case, the voice date received from IP telephone A101 is converted, at MG (Media Gateway) 113, into a data form necessary for the communication via the PSTN or the cellular phone network. Then, the converted data is transmitted from MG 113 to the PSTN or the cellular phone network via switchboard 114.

When the communication is performed between IP telephone A101 and IP telephone B102 via the IP network and when there are some problems occurred within the IP network, CA 106 (108) establishes communication via networks other than the IP network. For example, when the communication is performed via the PSTN, the voice data received from IP telephone A101 (IP telephone B102) is transmitted, as described above, to the PSTN via MG 113 (MG 115) and switchboard 114 (switchboard 116). Then, the voice data is transmitted to IP telephone B102 (IP telephone A101) via switchboard 116 (switchboard 114) and MG 115 (MG 113) of carrier B107 (carrier A105).

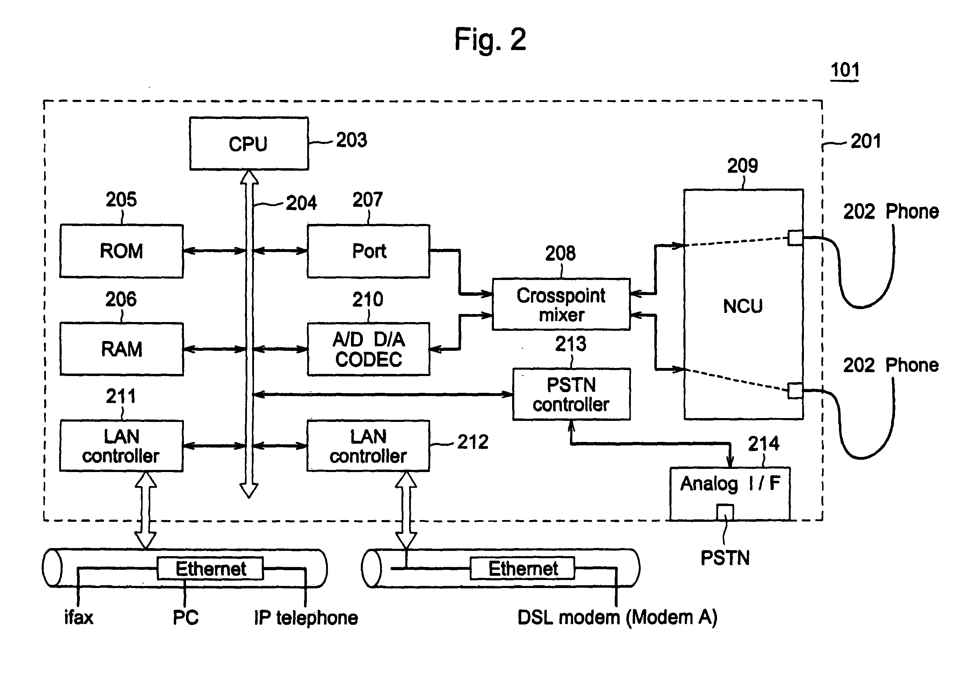

Fig. 2 is a block diagram illustrating a configuration of IP telephone A101 that structures the IP telephone system according to the present embodiment. IP telephone B102 has the same configuration.

As shown in Fig. 2, IP telephone A101 according to the present embodiment is configured to connect control adapter 201 to ordinary telephone 202. In this example, an ordinary telephone is a telephone that has no functions to make the voice communication via, the IP network and can only be communicated via the PSTN. Control adapter 201 according to the present embodiment can connect two ordinary telephones 202, and then each telephone functions as an IP telephone. Also, control adapter 201 can be configured to connect more than three telephones.

Control adapter 201 includes CPU 203 that controls the entire operation of the apparatus. ROM 205 and RAM 206 are connected to CPU 203 via control bus 204. ROM 205 stores a control program of control adapter 201, which CPU 203 retrieves and executes. RAM 206 functions as a work memory when CPU 203 executes the control program. Control adapter 201 uses a flash ROM as ROM 205 and uses SDRAM as RAM 206.

Crosspoint mixer 208 is connected to CPU 203 via port 207. Crosspoint mixer 208 has switching and mixing functions of talk lines for two telephones connected via an NCU, which is later described.

NCU (Network Control Unit) 209 is connected to crosspoint mixer 208. NCU 209 connects and terminates a line with the opposite party by controlling telephone lines connected to control adapter 201.

Further, A/D · D/ACODEC 210 is connected to CPU 203 via control bus 204. A/D · D/ACODEC 210 performs an analog/digital conversion of voice data, which is input from telephone 202, and compresses the converted data. On the other hand, after the compressed data received via a LAN controller, which is later described, is decompressed, a digital/analog conversion is performed to the decompressed data.

Further, LAN controller 211 and LAN controller 212 are connected to CPU 203 via control bus 204. LAN controller 211 controls signals exchanged between IP telephones and PCs or other devices connected via Ethernet (R). Ethernet (R) structures a network to which control adapter 201 is connected. Also, LAN controller 211 assembles and analyzes packet data transmitted on a network. LAN controller 212 controls signals exchanged between the IP network and control adapter 201 and between the ENUM network and control adapter 201 via a DSL modem (modem A), which is connected to control adapter 201 via Ethernet (R).

PSTN controller 213 is connected to CPU 203 via control bus 204. PSTN controller 213 controls signals exchanged between control adapter 201 and the PSTN connected via analog interface (I/F) 214.

When IP telephone A101 has the above described configuration, instead of connecting an ordinary telephone to control adapter 201, a control board having the functions of control adapter 201 is installed in IP telephone A101.

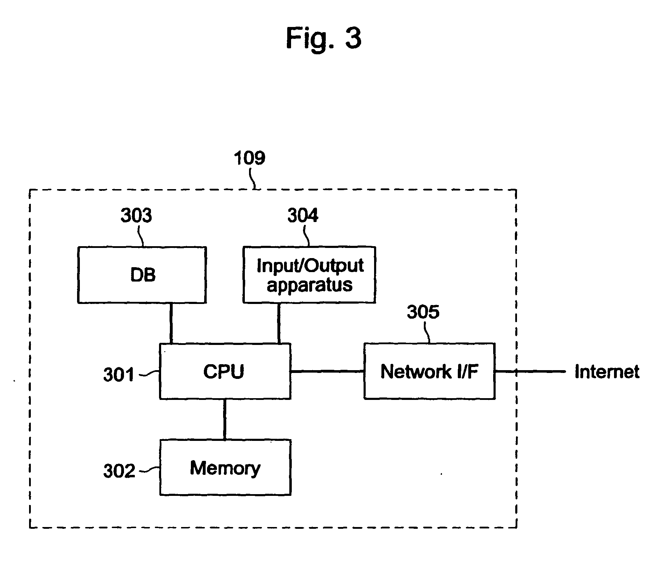

Fig. 3 is a block diagram illustrating a configuration of ENUM server 109 that structures the IP telephone system according to the present embodiment. ENUM server 110 has the same configuration.

As shown in Fig. 3, ENUM server 109 includes CPU 301 that controls the entire operation of the server. Memory 302 is connected to CPU 301. Memory 302 has ROM functions and RAM functions: ROM that stores the control program of ENUM server 109, which CPU 301 retrieves and executes, and RAM that functions as a work memory when CPU 301 executes the control program.

Also, Data Base (DB) 303 is connected to CPU 301. DB 303 stores a NAPTR resource record, which is later described. When CPU 301, for example, receives from IP telephone A101, a request based on standard E. 164, CPU 301 searches for a corresponding NAPTR resource record among data stored in DB 303 and returns the corresponding NAPTR resource record to IP telephone A101, which made the request.

Input/output apparatus 304 is connected to CPU 301. Input/output apparatus 304, for example, includes an input apparatus such as a keyboard and an output apparatus such as a display. An input apparatus, for example, is used to add and edit data stored in DB 303. An output apparatus, for example, is used by administrators of ENUM server 109 to confirm data stored in DB 303.

Network Interface (I/F) 305 is connected to CPU 301. Network I/F 305 is an interface to connect ENUM server 109 to the Internet.

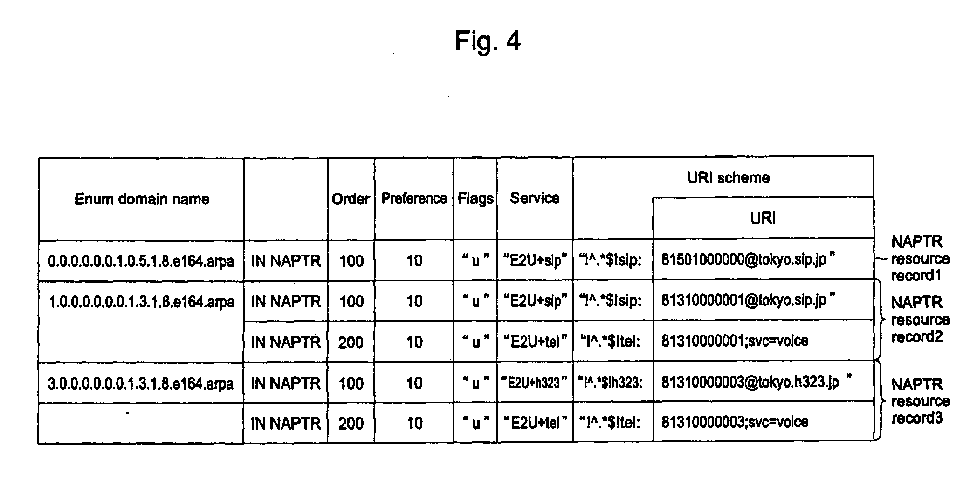

Fig. 4 shows an example of NAPTR resource records stored in DB 303 of ENUM server 109 according to the present embodiment. In Fig. 4, NAPTR resource records corresponding to domain names obtained from telephone numbers "0501000000", "0310000001" and "0310000003" are stored.

URI "81501000000@tokyo.sip.jp" corresponds to domain name "0.0.0.0.0.0.1.0,5.1.8.e164.arpa" obtained from telephone number "0501000000". This URI contains "E2U+sip" in a service field. "E2U+sip" indicates that the destination terminal can correspond to the SIP protocol.

Further, two URIs "81310000001@tokyo.sip.jp" and "81310000001; svc=voice" correspond to domain name "1.0.0.0.0.0.0.1.3.1.8.e164.arpa" obtained from telephone number "0310000001". Thus, DB 303 stores two NAPTR resource records that correspond to the destination terminal with the telephone number of "0310000001". The first URI contains "E2U+sip", in the service field, which indicates that the destination terminal can correspond to the SIP protocol. The second URI contains "E2U+teI", in the service field, which indicates that the communication can be established with the destination terminal via the PSTN.

Further, two URIs "81310000003@tokyo.h323.jp" and "81310000003 ; svc=voice" correspond to domain name "3.0.0.0.0.0.0.1.3.1.8.e164.arpa" obtained from telephone number "0310000003". Thus, DB 303 stores two NAPTR resource records that correspond to the destination terminal with the telephone number of "0310000003". The first URI contains "E2U+h323", in the service field, which indicates that the destination terminal can correspond to the H.323 protocol. The second URI contains "E2U+tel", in the service field, which indicates that the communication can be established with the destination terminal via the PSTN.

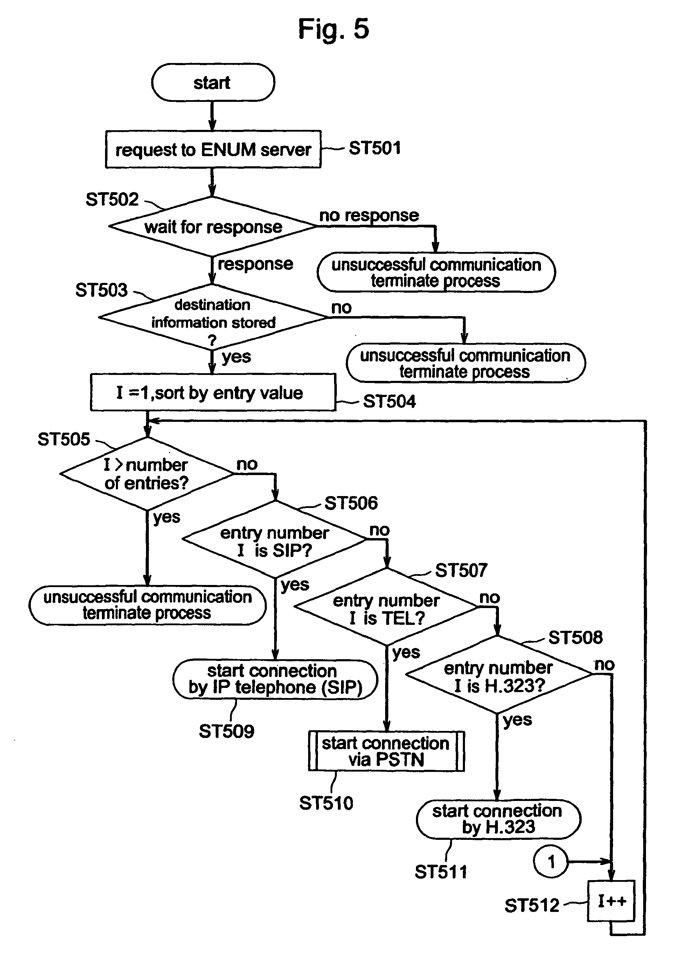

Fig. 5 is a flow chart illustrating an operation where IP telephone A101 places a call to IP telephone B102 in the IP telephone system according to the present embodiment. When the processes shown in Fig. 5 start, DB 303 of ENUM server 109 stores the NAPTR resource record described in Fig. 4.

When IP telephone A101 places a call to IP telephone B102, the telephone number of IP telephone B102 is input by the operator of IP telephone A101, and then a call-placement instruction is made. For example, when telephone number "0310000001" corresponds to IP telephone B102, telephone number "0310000001" is input and a call-placement instruction is made.

After receiving the telephone number and then a call-placement instruction, IP telephone A101 transmits, to ENUM server 109, a request for a NAPTR resource record corresponding to the telephone number (ST 501). In the above example, IP telephone A101 first converts the operator's input number "0310000001" into "+81-3-10000001" including the country code according to standard E. 164. Then, "+81310000001" is obtained, with + at the beginning, followed by the numbers. Then, non numerical symbols are deleted, and dots are inserted between the numbers, resulting in "8.1.3.1.0.0.0.0.0.0.1". Next, the numbers are reversed, and a string e164.arpa is added at the end. As a result, domain name "1.0.0.0.0.0.0.1.3.1.8. e164.arpa" is obtained. IP telephone A101 then transmits, to ENUM server 109, a request for the NAPTR resource record corresponding to the string.

IP telephone A101 waits for a response from ENUM server 109 (ST 502). When there is no response, IP telephone A101 determines that the communication is unsuccessful and terminates the process. For example, no response is obtained when there is a communication line failure.

On the other hand, when there is a response, it is determined that the NAPTR resource record corresponding to the destination terminal is stored (ST 503). When this NAPTR resource record is not stored, IP telephone A101 determines that the communication is unsuccessful and terminates the process. In the above example, DB 303 stores a NAPTR resource record corresponding to string "1.n.0.0.0.0.0.1.3.1.8.e164.arpa". Therefore, it is determined that the NAPTR resource record corresponding to the destination terminal is stored.

When it is determined that a NAPTR resource record corresponding to the destination terminal is stored, all the corresponding NAPTR resource records are received (hereafter referred to as "entry" accordingly). The received NAPTR resource records are sorted by values in an order filed, and an entry number to be processed is initialized (hereafter referred to as entry I) (ST 504). More specifically, the received entries are sorted by values in the order field of the NAPTR resource record, and entry number I is set to "1".

After entries are sorted, it is first determined whether entry number I exceeds the total number of the received NAPTR resource records (the number of entries) (ST 505). When entry number I exceeds the number of entries, IP telephone A101 determines that the communication is unsuccessful and terminates the process.

At steps after ST 506, it is determined that the service protocol of the received entry set as entry number I is SIP (ST 506), TEL (communication via the PSTN) (ST 507) or H.323 (ST 508). More specifically, the service protocol is determined according to information described in the service field of the received entry.

When SIP is specified as the service protocol, the connection is established by an IP telephone (SIP) (ST 509). On the other hand, when TEL is specified as the service protocol, the connection is established via the PSTN (ST 510). Furthermore, when H.323 is specified as the service protocol, the connection is established according to the H. 323 protocol (ST 511). When it is determined, at ST 506 - ST 508, that none of above-noted service protocols is present, IP telephone A101 increments entry number I (ST 512), returns the process to ST 505 and repeats ST 505 - ST 512.

When the connection is established via the PSTN at ST 510, the communication is directly performed between IP telephone A101 and IP telephone B102 via the PSTN shown in Fig. 1. In this case, CA 106 does not manage calls. Thus, by setting TEL as a service protocol (communication via the PSTN), it is possible to reduce the workload for CA 106.

A description is later provided regarding the connection start process performed by an IP telephone (SIP) (hereafter referred to as IP telephone connection start process) at ST 509 and regarding the connection start process according to the H.323 protocol at ST 511 (hereafter referred to as H.323 connection start process).

The following describes the processes of ST 504 - ST 512 using two examples where one of telephone numbers "0310000001" and "0310000003" corresponds to IP telephone B102. The first example is described in the following.

When telephone number "0310000001" corresponds to IP telephone B102, the second top NAPTR resource records are sorted according to the order shown in Fig. 4 at ST 504. More specifically, after the received NAPTR resource record are sorted, the NAPTR resource record with the SIP service protocol is specified to be accessed first. The NAPTR resource record with the TEL (communication via the PSTN) service protocol is specified to be accessed second. Accordingly, after ST 505, the process proceeds from ST 506 to ST 509, since the SIP service protocol is specified to be accessed first. Then, the process proceeds to the IP telephone connection start process.

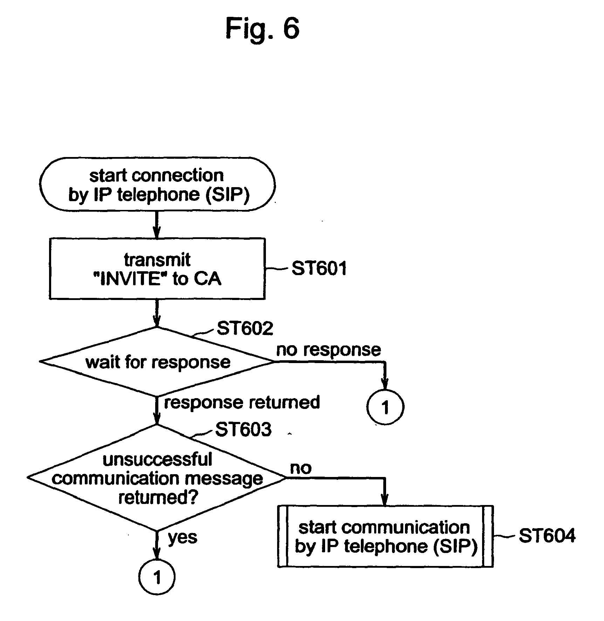

The following describes the IP telephone connection start process. Fig. 6 is a flow chart illustrating the IP telephone connection start process.

When the process proceeds to the IP telephone connection start process, IP telephone A101 first transmits, to CA 106, the message "INVITE" which includes information regarding the destination terminal (ST 601). As described above, IP telephone B102 is not managed by CA 106. Thus, CA 106 transmits the message "INVITE" to CA 108.

Upon receiving the message "INVITE" from CA 108, IP telephone B102 transmits, to IP telephone A101, a response message via CA 108 and CA 106. At ST 602, IP telephone A101 waits for the response from CA 106. When there is no response from CA 106, IP telephone A101 terminates the IP telephone connection start process and returns the process to ST 512.

When there is a response from CA 106, it is determined whether the returned message indicates that it is unsuccessful to establish communication with the destination terminal (ST 603). For example, when three digit message beginning with one of the numbers "4","5" and "6" (i.e. "4**, "5**" or "6**") is returned, it is determined whether it includes the message indicating that it is unsuccessful to establish communication with the destination terminal. When it is determined such a message is returned, IP telephone A101 terminates the IP telephone connection start process and returns the process to ST 512.

When it is determined that a message other than the one which indicates that it is unsuccessful to establish communication with the destination terminal, for instance, a message such as "180 Ringing" is returned, IP telephone A101 starts the communication performed by an IP telephone (SIP protocol) via CA 106 (ST 604). Accordingly, the communication is performed between IP telephone A101 and IP telephone B102, via the IP network shown in Fig. 1, according to the protocol specified by SIP. When the communication is performed via the IP network and when no communication can be established between CA 106 and CA 108, for a certain reason, the communication is performed via the PSTN.

When the process returns from ST 602 or ST 603 to ST 512 in the IP telephone connection start process, IP telephone A101 proceeds from ST 507 to ST 510 and establishes the connection via the PSTN, since the TEL service protocol is specified to be accessed second (communication via the PSTN). Accordingly, the communication is directly performed between IP telephone A101 and IP telephone B102 via the PSTN shown in Fig. 1.

As describe above, the communication is performed via the IP network, only when the entry specifying SIP is chosen in the service field. In this case, CA 106 manages calls. On the other hand, when the entry specifying TEL (communication via the PSTN) is chosen in the service field, CA 106 does not manage calls. Thus, the IP network is chosen as a communication path only when necessary. This reduces the workload for CA 106.

Next, a description is provided regarding a case where telephone number "0310000003" corresponds to IP telephone B102.

When telephone number "0310000003" corresponds to IP telephone B102, the third top NAPTR resource records are sorted according to the order described in Fig. 4 at ST 504. More specifically, after the received NAPTR resource records are sorted, the NAPTR resource record with the H.323 service protocol is specified to be accessed first. The NAPTR resource record with the TEL (communication via the PSTN) service protocol is specified to be accessed second. Accordingly, after ST 505, the process proceeds from ST 508 to ST 511, since the H.323 service protocol is specified to be accessed first. Then, the process proceeds to the H.323 connection start process.

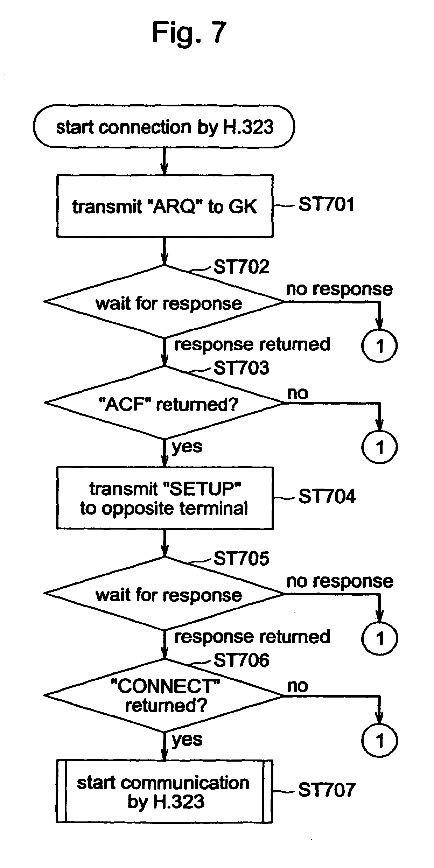

The following describes the H.323 connection start process. Fig. 7 is a flow chart illustrating the H.323 connection start process.

When the process proceeds to the H.323 connection start process, IP telephone A101 first transmits, to a gatekeeper (GK), which is not shown in the figure, the message "ARQ". The message "ARQ" is to ask whether the destination terminal is ready to communicate (ST 701).

The gatekeeper is provided between IP telephone A101 and CA 106, and between IP telephone B102 and CA 108. Various messages are exchanged between gatekeepers via CA 106 and CA 108. Each gatekeeper manages calls with each IP telephone and calls with the gatekeeper of the opposite party.

After transmitting the message "ARQ", IP telephone A101 waits for a response from the gatekeeper (ST 702). When there is no response, IP telephone A101 terminates the H.323 connection start process and returns the process to ST 512.

When there is a response from the gatekeeper, it is determined whether the message "ACF" is returned as the response message (ST 703). The message "ACF' includes the IP address for connection of IP telephone B102, which is the destination terminal. When messages other than "ACF" are returned, IP telephone A101 terminates the H.323 connection start process and returns the process to ST 512.

On the other hand, when it is determined that the message "ACF" is returned, IP telephone A101 transmits, to IP telephone B102, which is the destination terminal, the message "SETUP". The message "SETUP" indicates a connection request (ST 704).

After transmitting the message "SETUP", IP telephone A101 waits for a response from IP telephone B102, which is the destination terminal (ST 705). When there is no response, IP telephone A101 terminates the H.323 connection start process and returns the process to ST 512.

When there is a response from IP telephone B102, which is the destination terminal, it is determined whether the message "CONNECT", which indicates a connection approval, is returned as the response message (ST 705). When messages other than "CONNECT" are returned, IP telephone A101 terminates the H.323 connection start process and returns the process to ST 512.

When it is determined that the message "CONNECT" is returned, IP telephone A101 starts the communication according to the H.323 protocol (ST 707). Accordingly, the communication is performed between IP telephone A101 and IP telephone B102, via the IP network shown in Fig. 1, according to the protocol specified by H.323.

In the H.323 connection start process, when the process returns from ST 702, ST 703, ST 705 or ST 706 to ST 512, IP telephone A101 proceeds from ST 507 to ST 510 and establishes the connection via the PSTN, since the TEL service protocol is specified to be accessed second. Accordingly, the communication is directly performed between IP telephone A101 and IP telephone B102 via the PSTN shown in Fig. 1.

In other words, the communication is performed via the IP network, only when the entry specifying the H.323 protocol is chosen in the service field. In this case, CA 106 manages calls. On the other hand, when the entry specifying the TEL (communication via the PSTN) protocol is chosen in the service field, CA 106 does not manage calls. Thus, the IP network is chosen as a communication path only when necessary. This reduces the workload for CA 106.

The followings describe sequences of communication forms selected in the processes shown in Figs. 5, 6 and 7.

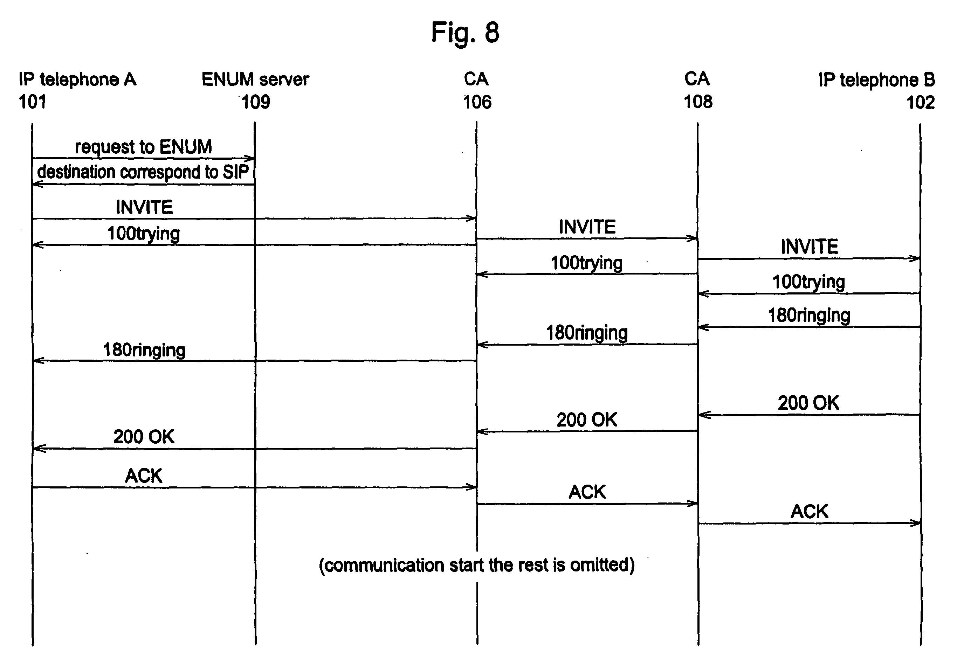

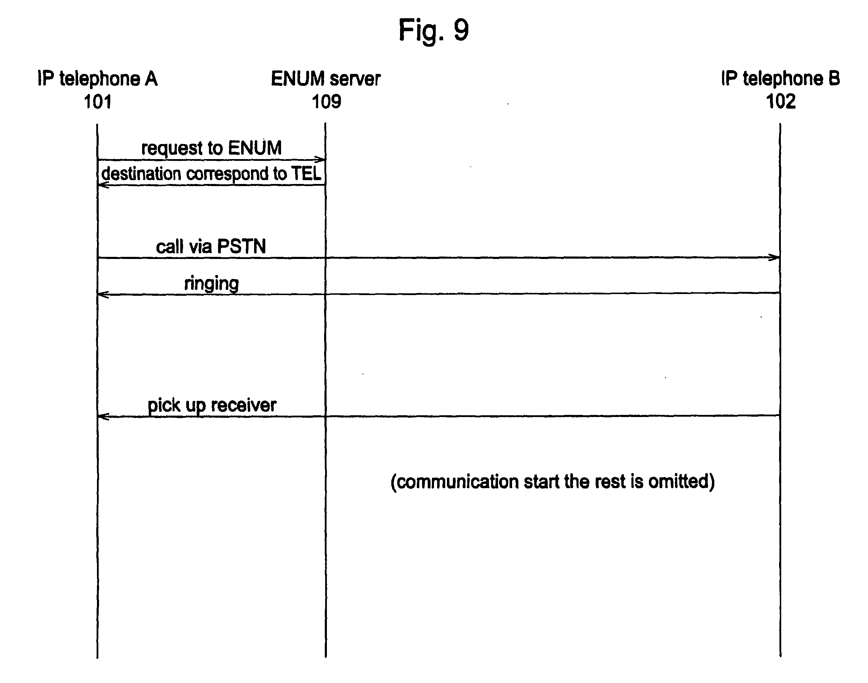

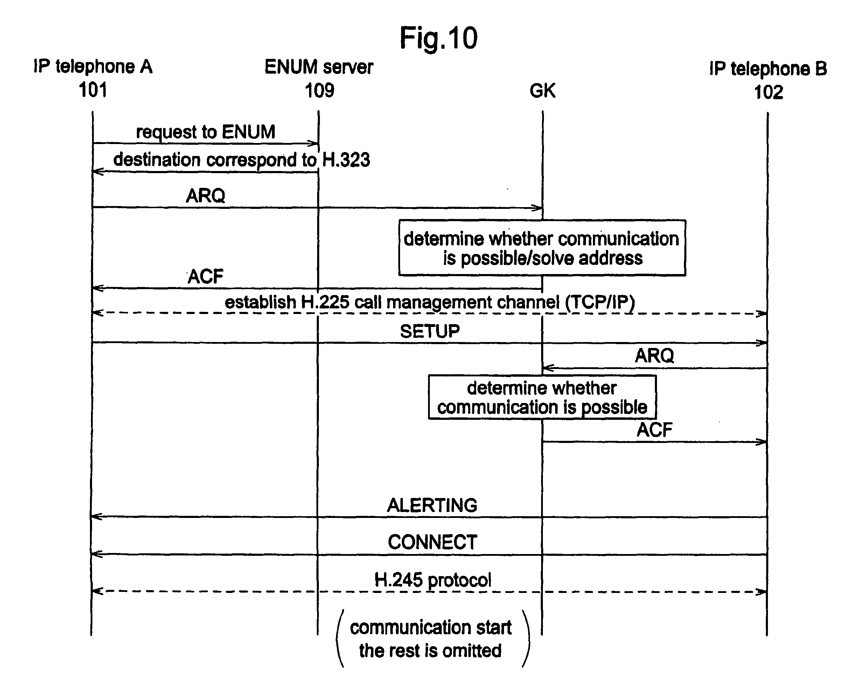

Figs. 8, 9 and 10 are sequence diagrams illustrating the communication performed between IP telephone A101 and IP telephone B102. Fig. 8 is a sequence diagram illustrating the communication performed according to the SIP protocol. Fig. 9 is a sequence diagram illustrating the communication performed via the PSTN. Fig. 10 is a sequence diagram illustrating the communication performed according to the H.323 protocol.

First, the communication performed according to the SIP protocol is described with reference to Fig. 8. In the Fig. 8 sequence, IP telephone B102 can correspond to the SIP protocol.

As shown in Fig. 8, when placing a call to IP telephone B102, IP telephone A101 first obtains, from the operator, the telephone number of IP telephone B102. IP telephone A101 then transmits, to ENUM server 109, a request for the NAPTR resource record that corresponds to the telephone number.

Upon receiving the request from IP telephone A101, ENUM server 109 returns the NAPTR resource record which indicates that IP telephone B102 can correspond to the SIP protocol.

Upon receiving this NAPTR resource record, IP telephone A101 transmits, to CA 106, the message "INVITE". CA 106 transmits, to IP telephone A101, the message "100 trying" at the same time as transmitting the message "INVITE" to CA 108. Similarly, CA 108 transmits the message "100 trying" to CA 106 at the same time as transmitting the message "INVITE" to IP telephone B102.

Upon receiving the message "INVITE", IP telephone B102 transmits, to CA 108, the message "100 trying" and then the message "180 Ringing". At the same time as transmitting the message "180 Ringing", IP telephone B102 sounds a receiving tone. Similarly, CA 108 transmits, to CA 106, the message "180 Ringing". CA 106 transmits, to IP telephone A101, the message "180 Ringing". IP telephone A101 sounds a ringing tone in response to the message "180 Ringing".

When, in response to the receiving tone, the hook-off condition is detected at the receiver of IP telephone B102, IP telephone B102 transmits, to CA 108, the message "200 OK" which indicates a connection approval. Similarly, CA 108 transmits the message "200 OK" to CA 106. CA 106 transmits the message "200 OK" to IP telephone A101.

Upon receiving the message "200 OK", IP telephone A101 transmits the message "Acknowledge (hereafter referred to as ACK) " to CA 106. Similarly, CA 106 transmits the message "ACK" to CA 108. CA 108 transmits the message "ACK" to IP telephone B102. When IP telephone B102 receives the message "ACK", IP telephone A101 and IP telephone B102 are ready to communicate via the IP network.

The following describes the communication performed via the PSTN with reference to Fig. 9. In the Fig. 9 sequence, IP telephone B102 can correspond to TEL (communication via the PSTN).

As shown in Fig. 9, when placing a call to IP telephone B102, IP telephone A101 first obtains, from the operator, the telephone number of IP telephone B102. IP telephone A101 transmits, to ENUM server 109, a request for the NAPTR resource record corresponding to the telephone number.

Upon receiving the request from IP telephone A101, ENUM server 109 returns the NAPTR resource record which indicates that IP telephone B102 can correspond to TEL (communication via the PSTN).

Upon receiving this NAPTR resource record, IP telephone A101 places a call to IP telephone B102 via the PSTN. In response to the call, IP telephone B102 transmits, to IP telephone A101, a ringing signal at the same time as sounding a receiving tone. IP telephone A101 sounds a ringing tone in response to the ringing signal.

When, in response to the receiving tone, the hook-off condition is detected at the receiver of IP telephone B102, IP telephone B102 informs IP telephone A101 accordingly. At the same time, IP telephone A101 and IP telephone B102 are ready to communicate via the PSTN.

The following describes the communication performed according to the H. 323 protocol with reference to Fig. 10. In the Fig. 10 sequence, IP telephone B102 can correspond to the H.323 protocol. In Fig. 10, CA 106 and CA 108 are not described, and the gatekeepers of IP telephone A101 and IP telephone B102 are described as a single gatekeeper (GK) for the purpose of simplification. In Fig. 10, signals are exchanged between the gatekeeper of IP telephone A101 and the gatekeeper of IP telephone B102 via CA 106 and CA 108.

As shown in Fig. 10, when placing a call to IP telephone B102, IP telephone A101 first obtains, from the operator, the telephone number of IP telephone B102. IP telephone A101 then transmits, to ENUM server 109, a request for the NAPTR resource record that corresponds to the telephone number.

Upon receiving the request from IP telephone A101, ENUM server 109 returns the NAPTR resource record which indicates that IP telephone B102 can correspond to the H.323 protocol.

Upon receiving this NAPTR resource record, IP telephone A101 transmits, to the gatekeeper, the message "ARQ" which inquires whether the destination terminal is ready to communicate. When receiving the message "ARQ", the gatekeeper determines whether IP telephone B102 is ready to communicate. At the same time, the gatekeeper converts the telephone number into a corresponding IP address. The gatekeeper then transmits, to IP telephone A101, the message "ACF" which includes the IP address for connection of IP telephone B102.

When IP telephone A101 receives the message "ACF", a call management channel by H.225 is established between IP telephone A101 and IP telephone B102. After the call management channel by H.225 is established, IP telephone A101 transmits the message "SETUP" to IP telephone B102.

Upon receiving the message "SETUP", IP telephone B102 transmits, to the gatekeeper, a request for a connection approval and the message "ARQ" which confirms the IP address of IP telephone A101. Upon receiving the message "ARQ", the gatekeeper determines whether to approve the connection with IP telephone A101. When there are no problems, the gatekeeper transmits, to IP telephone B102, the message "ACF" which includes the IP address of IP telephone A101.

Upon receiving the message "ACF", IP telephone B102 sounds a receiving tone. At the same time, IP telephone B102 transmits, to IP telephone A101, the message "ALERTING". The message "ALERTING" indicates that a call is being placed to the operator of IP telephone B102. IP telephone A101 sounds a ringing tone in response to the message "ALERTING".

When the operator of IP telephone B102 picks up the receiver in response to the receiving tone, IP telephone B102 transmits, to IP telephone A101, the message "CONNECT" which indicates a connection approval. When IP telephone A101 receive the message "CONNECT", IP telephone A101 and IP telephone B102 are ready to communicate. Then, negotiations take place, according to H.245, between IP telephone A101 and IP telephone B102.

As described above, in the IP telephone system according to the present embodiment, either the IP network or the PSTN is chosen as a communication path according to the NAPTR resource record returned from ENUM server 109, afterwhich the voice communication is performed. Thus, the system can correspond to multiple protocols needed to perform the communication via the IP network when the NAPTR resource record specifies the SIP protocol or the H.323 protocol in the service field.

The IP network or the PSTN is chosen as a communication path according to the NAPTR resource record returned from ENUM server 109. Thus, the IP network is chosen as a communication path only when necessary. On the other hand, when the PSTN is chosen, CA 106 does not manage calls. This reduces the workload for CA 106.

In particular, in the IP telephone system according to the present embodiment, when the SIP protocol or the H.323 protocol is specified in the service field of the NAPTR resource record, the IP network is chosen as a communication path. Calls are managed with the destination terminal through CA 106, via the IP network, afterwhich the voice communication is performed. Thus, by storing the NAPTR resource record specifying the SIP protocol or the H.323 protocol in the service field, it is possible to choose the IP network as a communication path and have the IP telephone management server to manage calls.

Also, when the PSTN communication is specified in the service field of the returned NAPTR resource record, the PSTN is chosen as a communication path. Calls are directly managed with the destination terminal without involving CA 106, afterwhich the voice communication is performed. Thus, by storing the NAPTR resource record specifying the PSTN communication In the service field it is possible to choose the PSTN as a communication path. This reduces the workload for CA 106.

Furthermore, in the IP telephone system according to the present embodiment, the service protocol is determined according to values set In the order field of the NAP"I"R resource record. Thus, by adjusting values in the order field, it is possible to specify the order of choosing between the IP network or the PSTN.

Furthermore, in the IP telephone system according to the present invention, voice is not limited to human voice. It also covers sounds in general, for example, modem signals modulated to voice bands and fax signals. Also, the telephone can be a fax apparatus as well.

The IP telephone described above includes an IP telephone defined by the government and operated by a telecommunications provider. It also includes an IP telephone provided on a local network or a private network using TCP/IP' or other computer network protocols.

The IP telephone system, the XP telephone apparatus and the communication method of the present invention are useful in that they can provide a more efficient IP telephone system that can correspond to multiple protocols needed to perform the communication via the IP network and also can reduce the workload for CAs on the IP network.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

## Claims

1. An Internet telephone system comprising:
an ENUM server (109, 110) configured to store a NAPTR, Naming Authority Pointer, the NAPTR resource record including an ENUM domain name corresponding to a URI;
a call agent apparatus (106, 108) configured to control a connection between Internet telephone apparatuses (101, 102) via an IP network,
an Internet telephone apparatus (101, 102) configured to place a call to a call destination (101, 102) via one of the IP network and the PSTN,
the internet telephone apparatus (101, 102) being further configured to transmit, to the ENUM server (109, 110), a request for transmitting, to the Internet telephone apparatus (101, 102), a NAPTR resource record corresponding to the call destination (101, 102), the NAPTR resource record including predetermined information, the predetermined information indicating a communication type which can be performed with the call destination (101, 102), the communication type including one of a call via the IP network and a call via the PSTN, to select one of the IP network and the PSTN, based on the predetermined information, and to access the call destination (101, 102) for a call, using the selected network,
the Internet telephone apparatus (101, 102) is adapted to communicate directly with the call destination (101, 102) when the selected network is the PSTN network.

2. The internet telephone system according to claim 1, **characterized in that** the predetermined information is contained in a Service field of the NAPTR resource record, and the Internet telephone apparatus (101, 102) selects the IP network, when the predetermined information indicates a call using a SIP, Session Initiation Protocol.

3. The Internet telephone system according to claim 1, **characterized in that** the predetermined information is contained in a Service field of the NAPTR resource record, and the Internet telephone apparatus (101, 102) selects the IP network, when the predetermined information indicates a call using a H.323 protocol.

4. The Internet telephone system according to claim 1, **characterized in that** the predetermined information is contained in a Service field of the NAPTR resource record, and the Internet telephone apparatus (101, 102) selects the PSTN, when the predetermined information indicates a call via the PSTN.

5. The Internet telephone system according to one of claims 1 to 4, **characterized in that** the NAPTR resource record includes a Service Field and an Order Field, the Service Field containing the predetermined information, the Order Field indicating a priority for each of a plurality of the predetermined information when the Service Field includes the plurality of the predetermined information, and the Internet telephone apparatus (101, 102) selects one of the IP network and the PSTN network, based on the priority indicated by the Order Field.

6. An Internet telephone apparatus connected to an ENUM server (109, 110) and to a call agent apparatus (106, 108), the ENUM server (109, 110) storing a NAPTR, Naming Authority Pointer, the NAPTR resource record including an ENUM domain name corresponding to a URI, the call agent apparatus (106, 108) controlling a connection between Internet telephone apparatuses (101, 102) via an IP network, the Internet telephone apparatus (101, 102) comprising:
a controller (301) configured to place a call to a call destination (101, 102) via one of the IP network and the PSTN,
the controller (301) being further configured to transmit, to the ENUM server (109, 110), a request for transmitting, to the internet telephone apparatus (101, 102), a NAPTR resource record corresponding to the call destination (101, 102), the NAPTR resource record including predetermined information, the predetermined information indicating a communication type which can be performed with the call destination (101, 102), the communication type including one of a call via the IP network and a call via the PSTN, to select one of the IP network and the PSTN, based on the predetermined information, and to access the call destination (101, 102) for a call, using the selected network,
the Internet telephone apparatus (101, 102) is adapted to communicate directly with the call destination (101, 102) when the selected network is the PSTN network.

7. The Internet telephone apparatus according to claim 6, **characterized in that** the predetermined information is contained in a Service field of the NAPTR resource record, and the controller (301) selects the IP network, when the predetermined information indicates a call using a SIP, Session Initiation Protocol.

8. The Internet telephone apparatus according to claim 6, **characterized in that** the predetermined information is contained in a Service field of the NAPTR resource record, and the controller (301) selects the IP network, when the predetermined information indicates a call using a H.323 protocol.

9. The internet telephone apparatus according to claim 6, **characterized in that** the predetermined information is contained in a Service field of the NAPTR resource record, and the controller (301) selects the PSTN, when the predetermined information indicates a call via the PSTN.

10. The internet telephone apparatus according to one of claims 6 to 9, **characterized in that** the NAPTR resource record includes a Service Field and an Order Field, the Service Field containing the predetermined information, the Order Field indicating a priority for each of a plurality of the predetermined information when the Service Field includes the plurality of the predetermined information, and the Internet telephone apparatus (101, 102) selects one of the IP network and the PSTN network, based on the priority indicated by the Order Field.

11. A method for calling via one of an IP network and a PSTN, Public Switched Telephone Networks, using an ENUM server (109, 110) and a call agent apparatus (106, 108), the ENUM server (109, 110) storing a NAPTR, Naming Authority Pointer, the NAPTR resource record including an ENUM domain name corresponding to a URI, the call agent apparatus (106, 108) controlling a connection between internet telephone apparatuses (101, 102) via an IP network, the method comprising:
transmitting, to the ENUM server (109, 110), a request for transmitting, to the Internet telephone apparatus (101, 102), a NAPTR resource record corresponding to the call destination (101, 102), the NAPTR resource record including predetermined information, the predetermined information indicating a communication type which can be performed with the call destination (101, 102), the communication type including one of a call via the IP network and a call via the PSTN;
selecting one of the IP network and the PSTN, based on the predetermined information; and
accessing the call destination (101, 102) for a call, using the selected network,
directly performing communication between the Internet telephone apparatus (101, 102) and the call destination (101, 102) when the selected network is the PSTN network.

12. The method according to claim 11, **characterized in that** the predetermined information is contained in a Service field of the NAPTR resource record, and the selecting comprises selecting the IP network, when the predetermined information indicates a call using a SIP, Session Initiation Protocol.

13. The method according to claim 11, **characterized in that** the predetermined information is contained in a Service field of the NAPTR resource record, and the selecting comprising selecting the IP network, when the predetermined information indicates a call using a H.323 protocol.

14. The method according to claim 11, **characterized in that** the predetermined information is contained in a Service field of the NAPTR resource record, and the selecting comprising selecting the PSTN, when the predetermined information indicates a call via the PSTN.

15. The method according to one of claims 11 to 14, **characterized in that** the NAPTR resource record includes a Service Field and an Order Field, the Service Field containing the predetermined information, the Order Field indicating a priority for each of a plurality of the predetermined information when the Service Field includes the plurality of the predetermined information, and the selecting comprises selecting one of the IP network and the PSTN network, based on the priority indicated by the Order Field.

## Patentansprüche

1. Internet-Telefonsystem, das umfasst:
einen ENUM-Server (109, 110), der so konfiguriert ist, dass er einen NAPTR (Naming Authority Pointer) speichert, wobei der NAPTR-Ressourceneintrag einen ENUM-Domännamen enthält, der einer URI entspricht;
eine Call-Agent-Vorrichtung (106, 108), die so konfiguriert ist, dass sie eine Verbindung zwischen Internet-Telefonvorrichtungen (101, 102) über ein IP-Netzwerk steuert,
eine Internet-Telefonvorrichtung (101, 102), die so konfiguriert ist, dass sie einen Anruf bei einem Anruf-Ziel (101, 102) über das IP-Netzwerk oder das öffentliche Fernsprechnetz tätigt,
wobei die Internet-Telefonvorrichtung (101, 102) des Weiteren so konfiguriert ist, dass sie an den ENUM-Server (109, 110) eine Anforderung zum Senden eines NAPTR-Ressourceneintrags, der dem Anruf-Ziel (101, 102) entspricht, zu der Internet-Telefonvorrichtung (101, 102) sendet wobei der NAPTR-Ressourceneintrag vorgegebene Informationen enthält und die vorgegebenen Informationen einen Typ der Kommunikation anzeigen, die mit dem Anruf-Ziel (101, 102) durchgeführt werden kann, und der Kommunikations-Typ einen Anruf über das IP-Netzwerk oder einen Anruf über das öffentliche Fernsprechnetz einschließt, um auf Basis der vorgegebenen Informationen das IP-Netzwerk oder das öffentliche Fernsprechnetz auszuwählen und unter Verwendung des ausgewählten Netzwerks auf das Anruf-Ziel (101, 102) für einen Anruf zuzugreifen,
die Internet-Telefonvorrichtung (101, 102) so eingerichtet ist, dass sie direkt mit dem Anruf-Ziel (101, 102) kommuniziert, wenn das ausgewählte Netzwerk das öffentliche Fernsprechnetz ist.

2. Internet-Telefonsystem nach Anspruch 1, **dadurch gekennzeichnet, dass** die vorgegebenen Informationen in einem Service-Feld des NAPTR-Ressourceneintrags beinhaltet sind und die Internet-Telefonvorrichtung (101, 102) das IP-Netzwerk auswählt, wenn die vorgegebenen Informationen einen Anruf unter Verwendung eines SIP (Session Initiation Protocol) anzeigen.

3. Internet-Telefonsystem nach Anspruch 1, **dadurch gekennzeichnet, dass** die vorgegebenen Informationen in einem Service-Feld des NAPTR-Ressourceneintrags beinhaltet sind und die Internet-Telefonvorrichtung (101, 102) das IP-Netzwerk auswählt, wenn die vorgegebenen Informationen einen Anruf unter Verwendung eines H.323-Protokolls anzeigen.

4. Internet-Telefonsystem nach Anspruch 1, **dadurch gekennzeichnet, dass** die vorgegebenen Informationen in einem Service-Feld des NAPTR-Ressourceneintrags beinhaltet sind und die Internet-Telefonvorrichtung (101, 102) das öffentliche Fernsprechnetz auswählt, wenn die vorgegebenen Informationen einen Anruf über das öffentliche Fernsprechnetz anzeigen.

5. Internet-Telefonsystem nach einem der Ansprüche 1 bis 4, **dadurch gekennzeichnet, dass** der NAPTR-Ressourceneintrag ein Service-Feld und ein Order-Feld enthält, wobei das Service-Feld die vorgegebenen Informationen beinhaltet und das Order-Feld eine Priorität für jede einer Vielzahl der vorgegebenen Informationen anzeigt, wenn das Service-Feld die Vielzahl der vorgegebenen Informationen enthält, und die Internet-Telefonvorrichtung (101, 102) das IP-Netzwerk oder das öffentliche Fernsprechnetz auf Basis der durch das Order-Feld angezeigten Priorität auswählt.

6. Internet-Telefonvorrichtung, die mit einem ENUM-Server (109, 110) und einer Call-Agent-Vorrichtung (106, 108) verbunden ist, wobei der ENUM-Server (109, 110) einen NAPTR (Naming Authority Pointer) speichert, der NAPTR-Ressourceneintrag einen ENUM-Domännamen enthält, der einer URI entspricht, die Call-Agent-Vorrichtung (106, 108) eine Verbindung zwischen Internet-Telefonvorrichtungen (101, 102) über ein IP-Netzwerk steuert und die Internet-Telefonvorrichtung (101, 102) umfasst:
eine Steuereinrichtung (301), die so konfiguriert ist, dass sie einen Anruf bei einem Anruf-Ziel (101, 102) über das IP-Netzwerk oder das öffentliche Fernsprechnetz tätigt,
wobei die Steuereinrichtung (301) des Weiteren so konfiguriert ist, dass sie an den ENUM-Server (109, 110) eine Anforderung zum Senden eines NAPTR-Ressourceneintrags, der dem Anruf-Ziel (101, 102) entspricht, zu der Internet-Telefonvorrichtung (101, 102) sendet,
wobei der NAPTR-Ressourceneintrag vorgegebene Informationen enthält und die vorgegebenen Informationen einen Typ der Kommunikation anzeigen, die mit dem Anruf-Ziel (101, 102) durchgeführt werden kann, der Kommunikations-Typ einen Anruf über das IP-Netzwerk oder einen Anruf über das öffentliche Fernsprechnetz einschließt, um auf Basis der vorgegebenen Informationen des IP-Netzwerk oder das öffentliche Fernsprechnetz auszuwählen und unter Verwendung des ausgewählten Netzwerks auf das Anruf-Ziel (101, 102) für einen Anruf zuzugreifen,
die Internet-Telefonvorrichtung (101, 102) so eingerichtet ist, dass sie direkt mit dem Anruf-Ziel (101, 102) kommuniziert, wenn das ausgewählte Netzwerk das öffentliche Fernsprechnetz ist.

7. Internet-Telefonvorrichtung nach Anspruch 6, **dadurch gekennzeichnet, dass** die vorgegebenen Informationen in einem Service-Feld des NAPTR-Ressourceneintrags beinhaltet sind und die Steuereinrichtung (301) das IP-Netzwerk auswählt, wenn die vorgegebenen Informationen einen Anruf unter Verwendung eines SIP (Session Initiation Protocol) anzeigen.

8. Internet-Telefonvorrichtung nach Anspruch 6, **dadurch gekennzeichnet, dass** die vorgegebenen Informationen in einem Service-Feld des NAPTR-Ressourceneintrags beinhaltet sind und die Steuereinrichtung (301) das IP-Netzwerk auswählt, wenn die vorgegebenen Informationen einen Anruf unter Verwendung eines H.323-Protokolls umfasst.

9. Internet-Telefonvorrichtung nach Anspruch 6, **dadurch gekennzeichnet, dass** die vorgegebenen Informationen in einem Service-Feld des NAPTR-Ressourceneintrags enthalten sind und die Steuereinrichtung (301) das öffentliche Fernsprechnetz auswählt, wenn die vorgegebenen Informationen einen Anruf über das öffentliche Fernsprechnetz anzeigen.

10. Internet-Telefonvorrichtung nach einem der Ansprüche 6 bis 9, **dadurch gekennzeichnet, dass** der NAPTR-Ressourceneintrag ein Service-Feld und ein Order-Feld enthält, wobei das Service-Feld die vorgegebenen Informationen beinhaltet und das Order-Feld eine Priorität für jede einer Vielzahl der vorgegebenen Informationen anzeigt, wenn das Service-Feld die Vielzahl der vorgegebenen Informationen enthält, und die Internet-Telefonvorrichtung (101, 102) das IP-Netzwerk oder das öffentliche Fernsprechnetz auf Basis der durch das Order-Feld angezeigten Priorität auswählt.

11. Verfahren zum Anrufen über ein IP-Netzwerk oder ein öffentliches Fernsprechnetz unter Verwendung eines ENUM-Servers (109, 110) und einer Call-Agent-Vorrichtung (106, 108), wobei der ENUM-Server (109, 110) einen NAPTR (Naming Authority Pointer) speichert, der NAPTR-Ressourceneintrag einen ENUM-Domännamen enthält, der einer URI entspricht, und die Call-Agent-Vorrichtung (106, 108) eine Verbindung zwischen Internet-Telefonvorrichtungen (101, 102) über ein IP-Netzwerk steuert, wobei das Verfahren umfasst:
Senden einer Anforderung an den ENUM-Server (109, 110) zum Senden eines NAPTR-Ressourceneintrags, der dem Anruf-Ziel (101, 102) entspricht, zu der Internet-Telefonvorrichtung (101, 102), wobei der NAPTR-Ressourceneintrag vorgegebene Informationen enthält und die vorgegebenen Informationen einen Typ der Kommunikation anzeigen, die mit dem Anruf-Ziel (101, 102) durchgeführt werden kann, und der Kommunikations-Typ einen Anruf über das IP-Netzwerk oder einen Anruf über das öffentliche Fernsprechnetz einschließt:
Auswählen des IP-Netzwerks oder des öffentlichen Fernsprechnetzes auf Basis der vorgegebenen Informationen; und
Zugreifen auf das Anruf-Ziel (101, 102) für einen Anruf unter Verwendung des ausgewählten Netzwerks,
direktes Durchführen von Kommunikation zwischen der Internet-Telefonvorrichtung (101, 102) und dem Anruf-Ziel (101, 102), wenn das ausgewählte Netzwerk das PSTN-Netzwerks ist.

12. Verfahren nach Anspruch 11, **dadurch gekennzeichnet, dass** die vorgegebenen Informationen in einem Service-Feld des NAPTR-Ressourceneintrags beinhaltet sind und das Auswählen Auswählen des IP-Netzwerks umfasst, wenn die vorgegebenen Informationen einen Anruf unter Verwendung eines SIP (Session Initiation Protocol) anzeigen.

13. Verfahren nach Anspruch 11, **dadurch gekennzeichnet, dass** die vorgegebenen Informationen in einem Service-Feld des NAPTR-Ressourceneintrags beinhaltet sind und das Auswählen Auswählen des IP-Netzwerks umfasst, wenn die vorgegebenen Informationen einen Anruf unter Verwendung eines H.323-Protokolls anzeigen.

14. Verfahren nach Anspruch 11, **dadurch gekennzeichnet, dass** die vorgegebenen Informationen in einem Service-Feld des NAPTR-Ressourceneintrags beinhaltet sind und das Auswählen Auswählen des öffentlichen Fernsprechnetzes umfasst, wenn die vorgegebenen Informationen einen Anruf über das öffentliche Fernsprechnetz anzeigen.

15. Verfahren nach einem der Ansprüche 11 bis 14, **dadurch gekennzeichnet, dass** der NAPTR-Ressourceneintrag ein Service-Feld und ein Order-Feld enthält, wobei das Service-Feld die vorgegebenen Informationen beinhaltet und das Order-Feld eine Priorität für jede einer Vielzahl der vorgegebenen Informationen anzeigt, wenn das Service-Feld die Vielzahl der vorgegebenen Informationen enthält, und das Auswählen Auswählen des IP-Netzwerks oder des öffentlichen Fernsprechnetzes auf Basis der durch das Order-Feld angezeigten Priorität umfasst.

## Revendications

1. Système de téléphonie par le réseau Internet comprenant :
un serveur de mappage ENUM (109, 110) configuré pour mémoriser un pointeur d'autorité d'attribution de nom, NAPTR, l'enregistrement de ressources de pointeur NAPTR incluant un nom de domaine de mappage ENUM correspondant à un identificateur uniforme de ressources, URI,
un dispositif d'agent d'appel (106, 108) configuré pour commander une connexion entre des appareils téléphoniques par réseau Internet (101, 102) par l'intermédiaire d'un réseau au protocole Internet (IP),
un appareil téléphonique par réseau Internet (101, 102) configuré pour téléphoner vers une destination d'appel (101, 102) par l'intermédiaire de l'un du réseau au protocole IP et du réseau téléphonique commuté RTC (PSTN),
l'appareil téléphonique par réseau Internet (101, 102) étant en outre configuré pour transmettre une demande au serveur de mappage ENUM (109, 110) pour émettre vers l'appareil téléphonique par réseau Internet (101, 102), l'enregistrement de ressources de pointeur NAPTR correspondant à la destination de l'appel (101, 102), l'enregistrement de ressources de pointeur NAPTR incluant des informations prédéfinies, les informations prédéfinies indiquant un type de communication qui peut être effectué avec la destination de l'appel (101, 102), le type de communication incluant l'un d'un appel par l'intermédiaire du réseau au protocole IP et d'un appel par l'intermédiaire du réseau téléphonique commuté RTC, afin de sélectionner l'un du réseau au protocole IP et du réseau téléphonique commuté RTC sur la base des informations prédéfinies, et pour accéder à la destination de l'appel (101, 102) en vue d'un appel en utilisant le réseau sélectionné,
l'appareil téléphonique par réseau Internet (101, 102) est conçu pour communiquer directement avec la destination de l'appel (101, 102) lorsque le réseau sélectionné est le réseau téléphonique commuté RTC.

2. Système de téléphonie par le réseau Internet selon la revendication 1, **caractérisé en ce que** les informations prédéfinies sont contenues dans un Champ de Service de l'enregistrement de ressources de pointeur NAPTR, et l'appareil téléphonique par réseau Internet (101, 102) sélectionne le réseau au protocole IP lorsque les informations prédéfinies indiquent un appel utilisant un protocole de déclenchement de session, SIP.

3. Système de téléphonie par le réseau Internet selon la revendication 1, **caractérisé en ce que** les informations prédéfinies sont contenues dans un Champ de Service de l'enregistrement de ressources de pointeur NAPTR, et l'appareil téléphonique par réseau Internet (101, 102) sélectionne le réseau au protocole IP lorsque les informations prédéfinies indiquent un appel utilisant le protocole H.323.

4. Système de téléphonie par le réseau Internet selon la revendication 1, **caractérisé en ce que** les informations prédéfinies sont contenues dans un Champ de Service de l'enregistrement de ressources de pointeur NAPTR, et l'appareil téléphonique par réseau Internet (101, 102) sélectionne le réseau téléphonique commuté RTC lorsque les informations prédéfinies indiquent un appel par l'intermédiaire du réseau téléphonique commuté RTC.

5. Système de téléphonie par le réseau Internet selon l'une des revendications 1 à 4, **caractérisé en ce que** l'enregistrement de ressources de pointeur NAPTR inclut un Champ de Service et un Champ d'Instructions, le Champ de Service contenant les informations prédéfinies, le Champ d'Instructions indiquant une priorité pour chacune d'une pluralité des informations prédéfinies lorsque le Champ de Service inclut la pluralité des informations prédéfinies, et l'appareil téléphonique par réseau Internet (101, 102) sélectionne l'un du réseau au protocole IP et du réseau téléphonique commuté RTC sur la base de la priorité indiquée par le Champ d'Instructions.

6. Appareil téléphonique par réseau Internet relié à un serveur de mappage ENUM (109, 110) et à un dispositif d'agent d'appel (106, 108), le serveur de mappage ENUM (109, 110) mémorisant un pointeur d'autorité d'attribution de nom, NAPTR, l'enregistrement de ressources de pointeur NAPTR incluant un nom de domaine de mappage ENUM correspondant à un identificateur uniforme de ressources, URI, le dispositif d'agent d'appel (106, 108) commandant une connexion entre des appareils téléphoniques par réseau Internet (101, 102) par l'intermédiaire d'un réseau au protocole IP, l'appareil téléphonique par réseau Internet (101, 102) comprenant :
un contrôleur (301) configuré pour téléphoner vers une destination d'appel (101, 102) par l'intermédiaire de l'un du réseau au protocole IP et du réseau téléphonique commuté RTC,
le contrôleur (301) étant en outre configuré pour transmettre, vers le serveur de mappage ENUM (109, 110), une demande pour émettre vers l'appareil téléphonique par réseau Internet (101, 102), un enregistrement de ressources de pointeur NAPTR correspondant à la destination de l'appel (101, 102), l'enregistrement de ressources de pointeur NAPTR incluant des informations prédéfinies, les informations prédéfinies indiquant un type de communication qui peut être effectué avec la destination d'appel (101, 102), le type de communication incluant l'un d'un appel par l'intermédiaire du réseau au protocole IP et d'un appel par l'intermédiaire du réseau téléphonique commuté RTC, afin de sélectionner l'un du réseau au protocole IP et du réseau téléphonique commuté RTC sur la base des informations prédéfinies, et pour accéder à la destination d'appel (101, 102) en vue d'un appel en utilisant le réseau sélectionné,
l'appareil téléphonique par réseau Internet (101, 102) est conçu pour communiquer directement avec la destination d'appel (101, 102) lorsque le réseau sélectionné est le réseau téléphonique commuté RTC.

7. Appareil téléphonique par réseau Internet selon la revendication 6, **caractérisé en ce que** les informations prédéfinies sont contenues dans un Champ de Service de l'enregistrement de ressources de pointeur NAPTR, et le contrôleur (301) sélectionne le réseau au protocole IP lorsque les informations prédéfinies indiquent un appel utilisant un protocole de déclenchement de session, SIP.

8. Appareil téléphonique par réseau Internet selon la revendication 6, **caractérisé en ce que** les informations prédéfinies sont contenues dans un Champ de Service de l'enregistrement de ressources de pointeur NAPTR, et le contrôleur (301) sélectionne le réseau au protocole IP lorsque les informations prédéfinies indiquent un appel utilisant le protocole H.323.

9. Appareil téléphonique par réseau Internet selon la revendication 6, **caractérisé en ce que** les informations prédéfinies sont contenues dans un Champ de Service de l'enregistrement de ressources de pointeur NAPTR, et le contrôleur (301) sélectionne le réseau téléphonique commuté RTC lorsque les informations prédéfinies indiquent un appel par l'intermédiaire du réseau téléphonique commuté RTC.

10. Appareil téléphonique par réseau Internet selon l'une des revendications 6 à 9, **caractérisé en ce que** l'enregistrement de ressources de pointeur NAPTR inclut un Champ de Service et un Champ d'Instructions, le Champ de Service contenant les informations prédéfinies, le Champ d'Instructions indiquant une priorité pour chacune d'une pluralité des informations prédéfinies lorsque le Champ de Service inclut la pluralité des informations prédéfinies, et l'appareil téléphonique par réseau Internet (101, 102) sélectionne l'un du réseau au protocole IP et du réseau téléphonique commuté RTC sur la base de la priorité indiquée par le Champ d'Instructions.

11. Procédé d'appel par l'intermédiaire de l'un d'un réseau au protocole IP et d'un réseau téléphonique commuté, RTC (PSTN), en utilisant un serveur de mappage ENUM (109, 110) et un dispositif d'agent d'appel (106, 108), le serveur de mappage ENUM (109, 110) mémorisant un pointeur d'autorité d'attribution de nom, NAPTR, l'enregistrement de ressources de pointeur NAPTR incluant un nom de domaine de mappage ENUM correspondant à un identificateur uniforme de ressources, URI, le dispositif d'agent d'appel (106, 108) commandant une connexion entre des appareils téléphoniques par réseau Internet (101, 102) par l'intermédiaire d'un réseau au protocole IP, le procédé comprenant :
la transmission, vers le serveur de mappage ENUM (109, 110), d'une demande pour émettre vers l'appareil téléphonique par réseau Internet (101, 102) un enregistrement de ressources de pointeur NAPTR correspondant à la destination de l'appel (101, 102), l'enregistrement de ressources de pointeur NAPTR incluant des informations prédéfinies, les informations prédéfinies indiquant un type de communication qui peut être effectué avec la destination d'appel (101, 102), le type de communication incluant l'un d'un appel par l'intermédiaire du réseau au protocole IP et d'un appel par l'intermédiaire du réseau téléphonique commuté RTC,
la sélection de l'un du réseau au protocole IP et du réseau téléphonique commuté RTC sur la base des informations prédéfinies, et
l'accès à la destination de l'appel (101, 102) en vue d'un appel en utilisant le réseau sélectionné,
l'exécution directe d'une communication entre l'appareil téléphonique par réseau Internet (101, 102) et la destination d'appel (101, 102) lorsque le réseau sélectionné est le réseau téléphonique commuté RTC.

12. Procédé selon la revendication 11, **caractérisé en ce que** les informations prédéfinies sont contenues dans un Champ de Service de l'enregistrement de ressources de pointeur NAPTR, et la sélection comprend la sélection du réseau au protocole IP lorsque les informations prédéfinies indiquent un appel utilisant un protocole de déclenchement de session, SIP.

13. Procédé selon la revendication 11, **caractérisé en ce que** les informations prédéfinies sont contenues dans un Champ de Service de l'enregistrement de ressources de pointeur NAPTR, et la sélection comprend la sélection du réseau au protocole IP lorsque les informations prédéfinies indiquent un appel utilisant le protocole H.323.

14. Procédé selon la revendication 11, **caractérisé en ce que** les informations prédéfinies sont contenues dans un Champ de Service de l'enregistrement de ressources de pointeur NAPTR, et la sélection comprend la sélection du réseau téléphonique commuté RTC lorsque les informations prédéfinies indiquent un appel par l'intermédiaire du réseau téléphonique commuté RTC.

15. Procédé selon l'une des revendications 11 à 14, **caractérisé en ce que** l'enregistrement de ressources de pointeur NAPTR inclut un Champ de Service et un Champ d'Instructions, le Champ de Service contenant les informations prédéfinies, le Champ d'Instructions indiquant une priorité pour chacune d'une pluralité des informations prédéfinies lorsque le Champ de Service inclut la pluralité des informations prédéfinies, et la sélection comprend la sélection de l'un du réseau au protocole IP et du réseau téléphonique commuté RTC sur la base de la priorité indiquée par le Champ d'Instructions.
